Europäisches Patentamt

European Patent Office

Office européen des brevets

(19)

(11) **EP 1 067 279 B1**

(12) **EUROPÄISCHE PATENTSCHRIFT**

(45) Veröffentlichungstag und Bekanntmachung des Hinweises auf die Patenterteilung:
**18.08.2004 Patentblatt 2004/34**

(51) Int Cl.⁷: **F01N 11/00**, F01N 3/08, F01N 3/28, B01D 53/94, F02D 41/02

(21) Anmeldenummer: **00113519.3**

(22) Anmeldetag: **26.06.2000**

(54) **Verfahren zum Erkennen und Aufrechterhalten der Betriebsbereitschaft eines nox-Speicherkatalysators**

Method to detect and maintain the state of a NOX storage catalyst

Procédé pour détecter et maintenir l'état d'un catalyseur d'accumulation des NOx

(84) Benannte Vertragsstaaten:
**DE FR GB**

(30) Priorität: **06.07.1999 DE 19931223**

(43) Veröffentlichungstag der Anmeldung:
**10.01.2001 Patentblatt 2001/02**

(73) Patentinhaber: **SIEMENS AKTIENGESELLSCHAFT 80333 München (DE)**

(72) Erfinder:
• **Beer, Johannes 93047 Regensburg (DE)**
• **Zhang, Hong, Dr. 93105 Tegernheim (DE)**

(56) Entgegenhaltungen:
**EP-A- 0 756 072     EP-A- 0 908 608
EP-A- 1 108 124     US-A- 5 746 049**

**Beschreibung**

Die Erfindung betrifft ein Verfahren zum Erkennen und Aufrechterhalten der Betriebsbereitschaft eines NOx - Speicherkatalysators gemäß dem Oberbegriff des Patentanspruches 1.

Für direkteinspritzende Otto-Brennkraftmaschinen wird zur Konvertierung der bei der Verbrennung entstehenden NOx-Schadstoffe ein NOx-Speicherkatalysator verwendet. Im Betrieb der Brennkraftmaschine mit magerem Gemisch wird NOx gespeichert, bei Betrieb mit fettem Gemisch wird gespeichertes NOx durch im Abgasstrom enthaltenes HC und CO reduziert und so zu $N_2$ konvertiert.

Die optimale NOx-Speicherkapazität des NOx-Speicherkatalysators ist dabei nur in einem bestimmten Temperaturintervall des Katalysatormonolithen gegeben. Dieses Temperaturintervall liegt typischerweise in einem Bereich von 250°C - 450°C.

Zudem ist die Monolithtemperatur eine wichtige Eingangsgröße für die NOx-Speicherfunktion, die in Abhängigkeit von motorischen Größen und der Monolithtemperatur den augenblicklichen Beladungsgrad des Nox-Speicherkatalysators bestimmt. Übersteigt der Beladungsgrad eine bestimmte Grenze, so wird ein Regenerationszyklus eingeleitet, in dem der Beladungsgrad wieder dekrementiert wird.

Versuche zeigen, daß das Temperaturverhalten eines NOx-Speicherkatalysators während Instationärvorgängen durch die beiden extremalen Monolithtemperaturen, die in Strömungsrichtung des Abgases gesehen am Katalysatoreingang und am Katalysatorausgang auftreten, gekennzeichnet ist. Diese beiden extremalen Temperaturen weisen stark unterschiedliches zeitliches Verhalten auf.

Dieses Verhalten gilt sowohl für Abgassysteme, bei denen der Katalysator einen einzigen Monolithen enthält, als auch für Katalysatoren mit mehreren, voneinander beabstandeten (getrennten) Monolithen.

In der älteren deutschen Patentanmeldung DE 198 36 955.7 der Anmelderin ist ein Verfahren zum Erkennen und Aufrechterhalten der Betriebsbereitschaft eines im Abgastrakt einer Brennkraftmaschine angeordneten NOx-Speicherkatalysators beschrieben, wobei die Temperatur des Abgases stromauf des NOx-Speicherkatalysators ermittelt wird und aus der ermittelten Abgastemperatur über ein Temperaturmodell eine erste Monolithtemperatur am Eingang des NOx-Speicherkatalysators berechnet wird. Aus der ersten Monolithtemperatur wird über das Temperaturmodell eine zweite Monolithtemperatur am Ausgang des NOx-Speicherkatalysators berechnet. Anschließend wird überprüft, ob beide Monolithtemperaturen innerhalb eines vorgegebenen Temperaturintervalles liegen. In Abhängigkeit des Ergebnisses der Überprüfung werden steuernde Maßnahmen für den Betrieb der Brennkraftmaschine eingeleitet, so daß diese Temperaturbedingung erfüllt und im weiteren Betrieb der Brennkraftmaschine aufrechterhalten wird.

Ein Einfluß der Alterung des dem NOx-Speicherkatalysators vorgeschalteten Vorkatalysators wird dabei nicht berücksichtigt.

Aus der DE 197 14 293 C1 ist ein Verfahren zum Überprüfen der Konvertierungsfähigkeit eines Vorkatalysators im Abgassystem einer Brennkraftmaschine bekannt. Zur Beurteilung der Konvertierungsfähigkeit wird nach einem Temperaturmodell die in einem nicht katalytisch beschichteten Referenzkatalysator erzeugte Wärmeenergie berechnet und mit der in dem Vorkatalysator erzeugten Wärmenergie verglichen, die gemessen wird.

Aus der Differenz wird ein Maß für Konvertierungsfähigkeit des Vorkatalysators ermittelt, das mit einem Vergleichswert verglichen wird. Der Vorkatalysator weist eine ausreichende Konverteierungsfähigkeit auf, wenn die Differenz über dem Vergleichswert liegt.

Aus der US 5,746,049 ist eine Vorrichtung und ein Verfahren zum Bestimmen und Regeln der Temperatur eines NOx-Speicherkatalysators beschrieben, wobei eine Steuerungseinrichtung vorgesehen ist, die einen Temperaturwert für den NOx-Speicherkatalysator aufgrund einer abgeschätzten Temperatur eines den NOx-Speicherkatalysator vorgeschalteten Drei-Wege-Katalysator abschätzt. Die so ermittelte Temperatur wird mit einem Schwellenwert verglichen. Abhängig vom Ergebnis dieses Vergleiches werden steuernde Maßnahmen eingeleitet, insbesondere die mittels einer Luftpumpe in dem Abgasstrang zwischen Vorkatalysator und NOx-Speicherkatalysator eingeblasene Luft eingestellt. Auch bei diesem bekannten Stand der Technik wird eine Alterung des Vorkatalysators am Erkennen und Aufrechterhalten der Betriebsbereitschaft des NOx-Speicherkatalysators nicht berücksichtig.

Der Erfindung liegt die Aufgabe zugrunde, die bekannten Verfahren zum Erkennen und Aufrechterhalten der Betriebsbereitschaft eines NOx-Speicherkatalysators hinsichtlich Genauigkeit zu verbessern. Insbesondere soll sichergestellt sein, daß er in einem zulässigen Temperaturbereich betrieben werden kann, in dem eine hohe Konvertierungsrate gegeben ist.

Diese Aufgabe wird durch die Merkmale des Patentanspruches 1 gelöst. Vorteilhafte Ausgestaltungen der Erfindung sind in den Unteransprüchen angegeben.

Ein zuverlässiges Erkennen und Aufrechterhalten der Betriebsbereitschaft des NOx-Speicherkatalysators wird erfindungsgemäß erreicht, in dem aus modellierter oder gemessener Abgastemperatur stromauf des NOx-Speicherkatalysators die Monolithtemperatur im NOx-Speicherkatalysator durch ein Temperaturmodell bestimmt wird, wobei auch der Alterungszustand des Vorkatalysators berücksichtigt wird.

Aufgrund des zeitlich unterschiedlichen Temperaturverhaltens von Ein- und Ausgang des NOx-Speicherkatalysators wird die Monolithtemperatur am Ausgang des NOx-Speicherkatalysators durch ein zusätzliches, gleich arbeitendes Temperaturmodell bestimmt. Eingangsgröße dieses Temperaturmodells ist die mittels des Modells berechnete Monolithtemperatur am Eingang des Katalysators.

Durch motorische Maßnahmen, wie z.B. Anfetten, Anheben der Temperatur durch Spätverstellen des Zündwinkels usw. wird dafür gesorgt, daß sich beide Temperaturwerte der Katalysatormonolithen in einem zulässigen Temperaturintervall befinden.

Das erfindungsgemäße Verfahren hat den Vorteil, daß die Anzahl von teueren Temperatursensoren vermindert werden kann, insbesondere braucht keine konstruktiv aufwendige Messung innerhalb des Katalysatormonolithen durchgeführt werden.

Durch die genaue Bestimmung der Monolithtemperaturen über ein Modell kann das für eine hohe Konvertierungsrate einzuhaltende Temperaturfenster genau eingehalten werden, unnötig ausgelöste Regenerationsphasen können vermieden werden, was sich wiederum in Kraftstoffeinsparungen und verbessertem Abgasverhalten niederschlägt.

Die Erfindung wird nachfolgend unter Bezugnahme auf die Zeichnung näher erläutert. Es zeigen:

Figur 1    ein Blockschaltbild einer Abgasanlage einer mit Direkteinspritzung arbeitenden Brennkraftmaschine mit zugehöriger Steuerungseinrichtung,

Figur 2    eine Prinzipdarstellung der Energiebilanzierung in einem dem NOx-Speicherkatalysator vorgeschalteten Vorkatalysator,

Figur 3    den graphischen Zusammenhang zwischen dem Wirkungsgrad der NOx-Konvertierung und der Monolithtemperatur,

Figur 4    zeitliche Verläufe von Monolithtemperaturen beim Aufheizen des NOx-Speicherkatalysators und

Figur 5    zeitliche Verläufe von Monolithtemperaturen beim Abkühlen des NOx-Speicherkatalysators.

Eine mit Direkteinspritzung arbeitende Otto-Brennkraftmaschine 10 ist mit einem Ansaugtrakt 11 und einem Abgastrakt 12 verbunden. Sie weist eine Kraftstoffzumeßeinrichtung 13 auf, die eine der Zylinderanzahl der Brennkraftmaschine entsprechende Anzahl von Einspritzventilen beinhaltet und die über entsprechnede Signale einer elektronischen Steuerungseinrichtung 14 der Brennkraftmaschine angesteuert werden. Über die Einspritzventile wird Kraftstoff direkt in die Zylinder der Brennkraftmaschine eingespritzt. In der Figur ist dabei die eingespritzte Kraftstoffmenge bei Betrieb mit Ladungsschichtung als MFF bezeichnet.

Ein im Ansaugtrakt 11 angeordneter Luftmassenmesser 15 gibt ein Signal für den der Verbrennung in den Zylindern zugeführten Luftmassenstrom $\dot{M}$ an die Steuerungseinrichtung 14 ab. Im Abgastrakt 12 ist ein Dreiwege-Katalysator, im folgenden als Vorkatalysator 16 bezeichnet und ein in Strömungsrichtung des Abgases gesehen nachgeschalteter NOx-Speicherkatalysator 17, auch als NOx-Trap bezeichnet, angeordnet. Beide Katalysatoren 16, 17 sind mittels eines kurzen, nicht näher bezeichneten Abgasrohres miteinander verbunden. Der Vorkatalysator 16 ist an einer Stelle nahe des Auslaßes der Brennkraftmaschine 10 angeordnet und dient zur Verkürzung der Aufheizzeit des NOx-Speicherkatalysators 17. Außerdem konvertiert er hauptsächlich die Schadstoffe HC und CO. Der NOx-Speicherkatalysator 17 dient in erster Linie zum Konvertieren von NOx, kann aber auch zusätzlich Dreiwege-Eigenschaften aufweisen.

Der Vorkatalysator 16 weist einen einzigen Monolithen Mon auf, während der NOx-Speicherkatalysator 17 zwei räumlich getrennte Monolithen Mon1 und Mon2 besitzt. Als Monolith wird dabei ein wabenförmiger Körper aus Metall oder Keramik bezeichnet, der eine geeignete Beschichtung aufweist.

Stromaufwärts des Vorkatalysators 16 ist eine Lambdasonde 18 angeordnet, welche in Abhängigkeit des Restsauerstoffgehaltes im Abgas ein stetiges Ausgangssignal $\lambda$ an die Steuerungseinrichtung 14 abgibt. Sie dient in bekannter Weise als Regelglied für eine Lambdaregelung des Kraftstoff-Luftgemisches der Brennkraftmaschine 10.

Ferner sind in dem Blockschaltbild an verschiedenen Stellen im Abgassystem Temperatursensoren eingezeichnet, von denen aber entsprechend der im folgenden beschriebenen Varianten des erfindungsgemäßen Verfahrens entweder alle, eine Kombination daraus, oder in einem besonderen Fall überhaupt keiner benötigt werden.

Ein Temperatursensor 19 erfasst die Abgastemperatur $T_{vvk}$ stromauf des Vorkatalysators 16 und ein Temperatursensor 20 erfasst die Abgastemperatur $T_{nvk}$ stromab des Vorkatalysators 16. Mit einem weiteren Temperatursensor 21 wird die Temperatur des Abgases $T_{vtr}$ stromauf des NOx-Speicherkatalysators 17 gemessen.

Die elektronische Steuerungseinrichtung 14 weist in bekannter Weise einen Mikrocomputer, entsprechende Schnittstellen für Signalaufbereitungsschaltungen, sowie eine Ein- und Ausgabeeinheit auf. Der Mikrocomputer umfaßt eine Zentraleinheit (CPU), welche die arithmetischen und logischen Operationen mit den eingespeisten Daten durchführt. Die dazu notwendigen Programme und Solldaten liefert ein Festwertspeicher (ROM), in dem alle Programmroutinen und alle Kenndaten, Kennlinien, Sollwerte usw. unverlierbar gespeichert sind. Insbesondere ist die Steuerungseinrichtung mit einem Speicher 24 verbunden, in dem u.a. eine Mehrzahl von Kennlinien bzw. Kennfeldern und Schwellenwerten gespeichert sind, deren Bedeutungen anhand der Beschreibung der nachfolgenden Figuren noch näher erläutert werden. Ein Betriebsdatenspeicher (RAM) dient u.a. dazu, die von den Sensoren gelieferten Daten zu speichern, bis sie vom Mikrocomputer abgerufen oder durch aktuellere Daten ersetzt, d.h. überschrieben werden. Über einen Bus werden alle genannten Einheiten mit Daten, Speicheradressen und Kontrollsignalen versorgt.

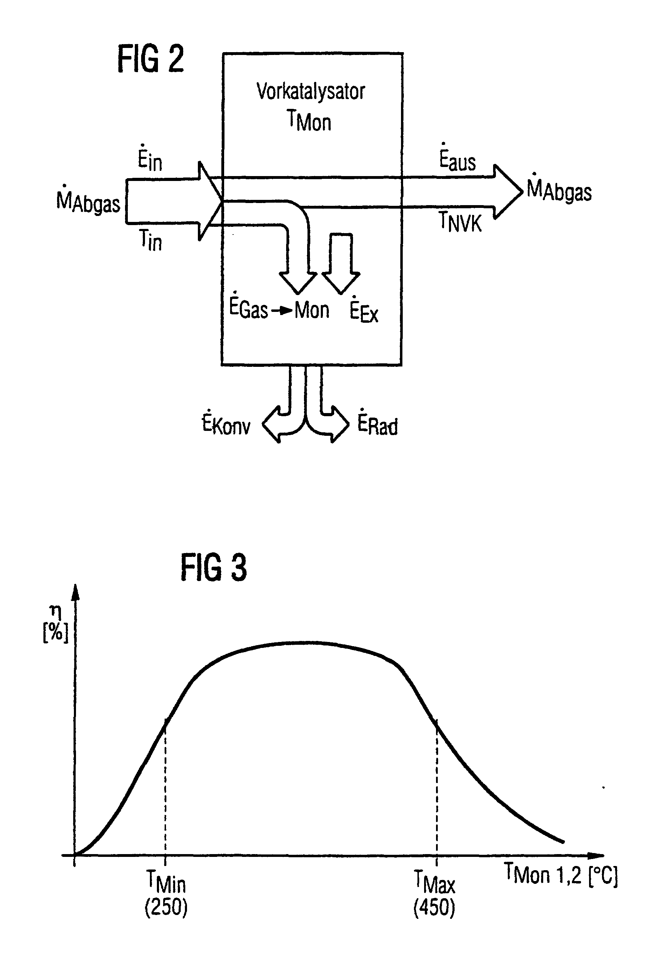

Zur Steuerung und Regelung der Brennkraftmaschine 10 ist die Steuerungseinrichtung 14 über eine hier nur schematisch dargestellte Daten- und Steuerleitung 22 noch mit weiteren Sensoren und Aktoren verbunden. Die Steuerungseinrichtung 14 wertet die Sensorsignale aus und steuert bzw. regelt unter anderem die Zündung, die Einspritzung, sowie die Abgasnachbehandlung. Als ein für das Verständnis der Erfindung wesentlicher Teil der Steuerungseinrichtung 14 ist ein Block 23 dargestellt, der die von den einzelnen Temperatursensoren abgegebene Signale auswertet und unter Benutzung weiterer, u.a. den Betriebszustand der Brennkraftmaschine charakterisierenden Parameter daraus die Temperaturen der einzelnen Monolithen mittels einer Modellbildung ermittelt, wie es im nachfolgenden anhand der Figuren 2-5 näher erläutert wird.

Im folgenden werden mehrere Möglichkeiten vorgestellt, wie unter Verwendung unterschiedlicher Eingangsgrößen die Monolithtemperaturen des NOx-Speicherkatalysators mit Hilfe eines Modells ermittelt werden können

Gemäß einer ersten Variante wird die Temperatur $T_{vtr}$ stromauf des NOx-Speicherkatalysators 17 mittels des Temperatursensors 21 erfasst. Dieser Wert ist Eingangsgröße für ein Temperaturmodell, mit dem die Monolithtemperatur $T_{Mon1}$ des 1. Monolithen Mon1 im NOx-Speicherkatalysator 17 ermittelt wird.

Wendet man eine Energiebilanzierung auf den 1. Monolithen an, so ergibt sich mit der gemessenen Eingangstemperatur $T_{vtr}$ als Eingangsgröße $T_{in}$ für das Modell:

$$T_{in} = T_{vtr} \tag{1}$$

$$\dot{T}_{Mon1} \cdot \dot{k}_2 = \dot{E}_{Gas \to Mon1} + \alpha(K_D) \cdot \dot{E}_{Ex} - \dot{E}_{Konv} \tag{2}$$

Die linke Seite von Gleichung (2) bezeichnet die thermische Energie des Monolithen Mon1; $k_2$ ist das Produkt aus thermischer Masse u. Wärmekapazität des Monolithen Mon1. Für die Terme auf der rechten Seite der Gleichung 2 gilt:

$$\dot{E}_{Gas \to Mon1} = \dot{M} \cdot k_1 \cdot (T_{in} - T_{Mon1})$$

Gleichung (3) bezeichnet den Wärmeübergang von Abgas auf den Monolithen Mon1. Mit $k_1$ ist der Wärmeübergangskoeffizient Abgas nach Monolith bezeichnet.

Der exotherme Reaktionsenergiestrom während des homogen mageren und geschichteten (stratified) Betrieb der Brennkraftmaschine, sowie während der Regenerationsphasen wird durch Gleichung (4) beschrieben:

$$\dot{E}_{Ex} = \dot{E}_{Ex\_Hom\_Strat}(\dot{M}, MFF, \lambda, k_4) + \dot{E}_{Ex\_Reg}(\dot{M}, \lambda, k_5) \tag{4}$$

Die Parameter $k_4$ u. $k_5$ sind zusätzliche Optimierungsparameter, um gemessene u. modellierte Temperaturverläufe besser anzupassen.

Messungen zeigen, daß bei Einsatz eines neuen oder neuwertigen Vorkatalysators im NOx-Speicherkatalysator abhängig von Vorkatalysatorgrößen, wie Volumen, Beschichtung und Zelldichte keine oder nur eine sehr geringe Exotherme auftritt, da in dem stromaufwärts des NOx-Speicherkataly-sators (NOx-Trap) angeordneten Vorkatalysator überwiegend eine HC und CO-Konvertierung stattfindet, wobei eine hohe Exotherme auftritt. Dies hat zur Folge, daß in dem Abgas, das den NOx-Speicherkatalysator durchströmt, keine oder eine zumindest stark verringerte HC-Konzentration vorliegt, wodurch die NOx-Konvertierung und Einspeicherung im NOx-Speicherkatalysator begünstigt wird. Außerdem wird dabei das Temperaturniveau im NOx-Speicherkatalysator abgesenkt.

Da die Monolithtemperatur des NOx-Speicherkatalysators stark von der HC und CO-Konvertierung des Vorkatalysators und damit von der Alterung des Vorkatalysators abhängt, wird bei der Modellierung der Monolithtemperatur des NOx-Speicherkatalysators der Alterungszustand des Vorkatalysators berücksichtigt.

Da wie bereits erwähnt, bei einem neuen oder neuwertigen Vorkatalysator im NOx-Speicherkatalysator keine Exotherme auftritt, können die Kennfelder in Gleichung 4 mit den Werten Null belegt werden.

Verwendet man allerdings einen Vorkatalysator, mit dem sich ein HC-Ergebnis an der OBD-Grenze (z.B. HC im Fahrzyklus Ece: 0,4g/km für die Schadstoffstufe EU4) ergibt, so entsteht im NOx-Speicherkatalysator eine Exotherme, welche die zu erwartende stationäre Monolithtemperatur des NOx-Speicherkatalysators, erhalten aus einer Abstimmung der Kennfelder aus Gleichung 4 für einen neuen Vorkatalysator, um bis zu 150°C erhöht. Die Kennfelder aus Gleichung 4 müssen deshalb demnach mit Werten ungleich Null belegt werden.

Dieser Widerspruch läßt sich durch eine Belegung der Kennfelder aus Gleichung 4 für eine Katalysatorkonfiguration, die einen Vorkatalysator umfasst, der gerade noch die OBD-Grenzwerte einhält (OBD-Grenz-Katalysator) sowie eines Wichtungsfaktors, der die Alterung des Vorkatalysators beinhaltet, lösen.

Mit diesem Wichtungsfaktor $\alpha(K_D)$, der von einem Katalysatordiagnosewert $K_D$ für den Vorkatalysator abhängt, wird der Wert für den exothermen Reaktionsenergiestrom $\dot{E}_{Ex}$ des NOx-Speicherkatalysators gewichtet (Gleichung 2).

Der Wichtungsfaktor $\alpha$ ist dabei abhängig von dem Katalysatordiagnosewert $K_D$ in einem Kennfeld des Speichers 24 der Steuerungseinrichtung 14 abgelegt. Die Katalysatordiagnosewerte $K_D$ für den Vorkatalysator können mittels eines beliebigen, bekannten Verfahrens z.B. mit dem in DE 197 14 293 C1 beschriebenen Verfahren ermittelt werden.

Der Katalysatordiagnosewert $K_D$ für einen neuen Katalysator ist hoch, da die Exotherme wesentlich größer ist als die von dem zugrundegelegten Referenzkatalysator. Aufgrund der hohen Exotherme im Vorkatalysator werden HC und CO oxidiert. Daraus folgt, daß keine oder nur in stark verminderter Anzahl Reaktionspartner für eine exotherme Reaktion im NOx-Speicherkatalysator zur Verfügung. Wenn aber keine oder annähernd keine Exotherme vorhanden ist, muß der Wichtungsfaktor den Wert $\beta$ aufweisen, wobei $\beta$ im Intervall zwischen Null und 1 liegt, vorzugsweise im Bereich um Null. Wenn der Katalysatordiagnosewert $K_D$ sehr gering ist (z.B. Null), bedeutet das, daß ein Vorkatalysator vorliegt, der genauso gealtert (geschädigt) ist, wie der OBD-Grenzkatalysator. Dann ist die Exotherme im Vorkatalysator sehr klein und somit steigt die Exotherme im NOx-Speicherkatalysator an, d.h. der Wichtungsfaktor $\alpha$ soll dann möglichst den Wert 1 aufweisen, weil dann die Kennfelder in Gleichung 4 genau für diesen OBD-Grenzkatalysator abgestimmt sind. Für beliebige Alterungszustände des Vorkatalysators zwischen diesen beiden Werten, wird der Wichtungsfaktor durch Interpolation der Kennfeldwerte ermittelt.

Damit gilt:

$$\alpha(K_D) = \begin{cases} \beta & \text{für neuen Vorkatalysator, } K_D = 1, \beta \in [0,1[ \\ \in\,]\beta,1[ & \text{andere beliebige Alterung} \\ 1 & \text{für Vorkatalysator am OBD - Limit, } K_D = 0 \end{cases}$$

Die Energieabgabe an die Umgebung durch Konvektion wird durch die Gleichung (5) beschrieben:

$$\dot{E}_{Konv} = k_3(v) \cdot (T_{Mon1} - T_{20}) \tag{5}$$

Die Konvektionskonstante $k_3(v)$ ist dabei von der Fahrgeschwindigkeit des mit dem beschriebenen Abgassystem ausgerüsteten Kraftfahrzeuges abhängig. $T_{20}$ bezeichnet die Umgebungstemperatur.

Faßt man die Gleichungen (2)-(5) zusammen, so erhält man eine gewöhnliche DGL 1.Ordnung für die Monolithtemperatur $T_{Mon1}$ des 1. Monolithen Mon1 im NOx-Speicherkatalysator 17:

$$\dot{T}_{Mon1} + \frac{\dot{M} \cdot k_1 + k_3(v)}{k_2} \cdot T_{Mon1} = \frac{\dot{M} \cdot k_1 \cdot T_{in} + k_3(v) \cdot T_{20} + \dot{E}_{Ex}}{k_2} \tag{6}$$

Aus Gleichung (6) kann die gesuchte Monolithtemperatur $T_{Mon1}$ durch ein aus der Mathematik hinlänglich bekanntes Integrationsverfahren (z.B. Euler, Runge Kutta) bestimmt werden. Die Modellparameter $k_1$ - $k_3$ werden durch eine Parameteroptimierung (z.B. Gradientenverfahren) so bestimmt, daß die mit dem Modell berechnete Monolithtemperatur $T_{Mon1}$ so gut wie möglich mit der gemessenen Monolithtemperatur bei Betrieb der Brennkraftmaschine mit fettem Gemisch oder unbeschichteten NOx-Speicherkatalysator (in diesem Betriebszustand findet keine keine exotherme Reaktion statt) übereinstimmt. Bei Verwendung eines Rohemmissions-NOx-Speicherkatalysators (enthält washcoat, aber kein Edelmetall und somit keine Exothermie) können die Parameter $k_1$ -$k_3$ wie oben beschrieben, in beliebigen betriebszuständen der Brennkraftmaschine identifiziert werden. Anschließend werden bei festgehaltenen Parametern $k_1$ - $k_3$ und unter Verwendung eines NOx-Speicherkatalysators mit Edelmetall die Parameter $k_4$ u. $k_5$ so bestimmt, daß die mit dem Modell berechnete Monolithtemperatur $T_{Mon1}$ so gut wie möglich mit der gemessenen Monolithtemperatur bei homogen mageren, geschichteten Betrieb der Brennkraftmaschine, sowie während der Regenerationsphase des NOx-Speicherkatalysators übereinstimmt.

Um das Modell abzugleichen, wird auf dem Prüfstand die Temperatur des Monolithen Mon1 mittels eines Temperatursensors gemessen, mit der modellierten Größe verglichen und die Modellparameter so eingestellt, daß die nachgebildete und die tatsächliche Temperatur möglichst genau übereinstimmen. Ist eine vorgegebene Genauigkeit bei der Übereinstimmung erreicht, so ist das Modell richtig abgeglichen und es kann für dieses Fahrzeug mit dem untersuchten Abgassystem zur Berechnung der Monolithtemperatur herangezogen werden. Dadurch kann auf den Einsatz eines teuren, nur mit großem technischen Aufwand realisierbaren Temperatursensors unmittelbar im Monolithen verzichtet werden. Ein solcher ist nur für die Applikation und den Abgleich des Modells auf dem Prüfstand notwendig.

Messungen zeigen, daß sich das Temperaturverhalten des 2. Monolithen, insbesondere während instationärer Betriebszustände deutlich vom Verhalten des 1. Monolithen unterscheidet. Deshalb ist es notwendig das Temperaturverhalten des 2. Monolithen durch ein eigenes Modell zu berücksichtigen.

Dazu wird die Ausgangsgröße $T_{Mon1}$ des Temperaturmodells für den 1. Monolithen als Eingangstemperatur für die Modellierung der 2. Monolithtemperatur $T_{Mon2}$ verwendet:

$$T_{in} = T_{Mon1} \qquad\qquad (7)$$

Es wird dabei angenommen, das nach Durchströmen des Abgases von Monolith 1 die Abgastemperatur gleich der Monolithtemperatur $T_{Mon1}$ ist.

Mit der Eingangsgröße aus Gleichung (7) gelten die Gleichungen (2)-(6) analog für die Monolithtemperatur $T_{Mon2}$ des 2. Monolithen. Die Parameter $k_1$-$k_5$ werden analog bestimmt, wie es anhand der Modellbildung der Monolithtemperatur $T_{Mon1}$ des 1. Monolithen beschrieben wurde, wobei sich im allgemeinen unterschiedliche Werte als die bei der Bestimmung von $T_{Mon1}$ ergeben. Für die Monolithtemperatur $T_{Mon2}$ ergibt sich somit eine gewöhnliche Differentialgleichung 2. Ordnung.

Gemäß einer zweiten Variante wird nicht die Abgastemperatur $T_{vtr}$ stromauf des NOx-Speicherkatalysators 17 als Eingangsgröße für das Temperaturmodell zur Bestimmung der beiden Monolithtemperaturen herangezogen, sondern die Abgastemperatur stromab des Vorkatalysators 16. Dieses Verfahren wird insbesondere dann angewandt, wenn die zur Diagnose des Vorkatalysators 16 ohnehin notwendigen Temperatursensoren 19 und 20 vorhanden sind. Damit steht die Temperatur $T_{nvk}$ auch zur Modellierung der Monolithtemperaturen zur Verfügung und bei einer solchen Konfiguration der Temperatursensoren erübrigt sich ein weiterer Temperatursensor zur Temperaturüberwachung des NOx-Speicherkatalysators. Die Modellparameter werden dabei so angepaßt, daß der Einfluß des Abgasrohres zwischen der Position des Temperatursensors 20 und dem Einlaß des NOx-Speicherkatalysators 17 berücksichtigt wird.

Die mittels des Temperatursensors 20 gemessene Temperatur $T_{nvk}$ wird als Eingangsgröße $T_{in}$ für das Monolithtemperaturmodell verwendet:

$$T_{in} = T_{nvk} \qquad\qquad (8)$$

Analog dem oben beschriebenen Verfahren werden nach den Gleichungen (2)-(6) die Modellparameter zur Berechnung der Monolithtemperatur $T_{Mon1}$ bestimmt.

Im Anschluß an die Bestimmung der Monolithtemperatur $T_{Mon1}$ des ersten Monolithen Mon1 werden im weiteren die Modellparameter zur Berechnung der Monolithtemperatur $T_{Mon2}$ des zweiten Monolithen Mon2 bestimmt, wobei als Eingangsgröße $T_{in}$ für das Modell

$$T_{in} = T_{Mon1} \qquad\qquad (9)$$

gilt. Das weitere Vorgehen ist analog zu dem bereits beschriebenen Verfahren. Es ist dabei eine Differentialgleichung 2. Ordnung zu lösen.

Für den Fall, daß weder der Temperatursensor 19, noch der Temperatursensor 20 vorhanden ist und somit die Temperaturwerte des Abgases vor ($T_{vvk}$) und nach ($T_{nvk}$) dem Vorkatalysator 16 nicht zur Verfügung stehen (in diesem Fall ist auch keine Diagnose des Vorkatalysators möglich), kann ein beliebiges Abgastemperaturmodell zur

Bestimmung der Abgastemperatur $T_{vvk}$ stromauf des Vorkatalysators verwendet werden. Mittels eines solchen Abgastemperaturmodells werden aus Zustandsgrößen der Brennkraftmaschine, welche die Abgastemperatur beeinflussen, wie z.B. Zündwinkel, angesaugte Luftmasse, Saugrohrdruck, Drehzahl, Kühlmitteltemperatur, Umgebungstemperatur die Abgastemperatur berechnet.

Durch ein Temperaturmodell für den Vorkatalysator 16 wird daran anschließend die Temperatur $T_{nvk}$ stromab des Vorkatalysators 16 modelliert. Die so erhaltene Temperatur $T_{nvk}$ kann dann wie oben bereits beschrieben (Gleichungen (2)-(6)) zur Bestimmung der beiden Monolithtemperaturen $T_{Mon1}$ und $T_{Mon2}$ verwendet werden. Dabei gilt für die Eingangsgröße des Modells zur Modellierung der Temperatur $T_{nvk}$:

$$T_{in} = T_{vvk} \tag{10}$$

Die Figur 2 zeigt eine Prinzipdarstellung der Energiebilanzierung im Vorkatalysator. Bei der Energiebilanzierung der thermischen Energie des Monolithen wird angenommen, daß die exotherme Reaktionsenergie, die mit Hilfe der Gleichung (4) unter Verwendung geeigneter Parameter bestimmt werden kann, vollständig zur Erwärmung des Monolithen aufgewendet wird. Damit erhält man

$$\dot{E}_{Gas \to Mon} + \dot{E}_{Ex} = \dot{T}_{Mon} \cdot k_2 + \dot{E}_{Konv} + \dot{E}_{Rad} \tag{11}$$

wobei für den Wärmeübergang von Abgas auf den Monolithen $\dot{E}_{Gas \to Mon}$ und die durch Konvektion abgegebene Energie $\dot{E}_{Konv}$ die Gleichungen (3) bzw. (4) gelten.

Für die an die Umgebung abgegebene Strahlungsleistung gilt:

$$\dot{E}_{Rad} = k_6 \cdot \left( T_{Mon}^{\ 4} - T_{20}^{\ 4} \right) \tag{12}$$

Dabei steht die Größe $k_6$ für das Produkt aus Boltzmannkonstante u. der Oberfläche des Vorkatalysatorgehäuses

. Aus Gleichung (11) erhält man eine gewöhnliche nicht lineare Differentialgleichung 1.Ordung für die Monolithtemperatur $T_{Mon}$ des Vorkatalysators, die sich durch ein Integrationsverfahren (z.B. Euler, Runge Kutta) lösen läßt.

Eine Energiebilanzierung über die zugeführte und abgegebene Abgasenergie sowie vom Abgas auf den Monolithen übertragenen Wärmestrom, liefert einen Ausdruck für die Abgastemperatur $T_{nvk}$ nach dem Vorkatalysator:

$$\dot{E}_{in} = \dot{E}_{Gas \to Mon} + \dot{E}_{aus} \tag{13}$$

Dabei gilt mit der spezifischen Wärme des Abgases $c_p$ :

$$\dot{E}_{in} = c_p \cdot \dot{M} \cdot T_{in} \; ; \qquad \dot{E}_{aus} = c_p \cdot \dot{M} \cdot T_{nvk} \tag{14}$$

Aus den Gleichungen (13) und (14) folgt schließlich:

$$T_{nvk} = T_{in} - \frac{k_1}{c_p} \left( T_{in} - T_{Mon} \right) \tag{15}$$

Die Modellparameter $k_1, k_2, k_3, k_6$ sowie die Parameter der exothermen Energie $k_4$ und $k_5$ aus Gleichung (4) werden über ein Parameteroptimierungsverfahren (z.B. Gradientenverfahren) so bestimmt, daß die Temperatur $T_{nvk}$ modelliert bestmöglich mit der entsprechenden gemessenen Größe übereinstimmt. Die Modellparameter $k_1, k_2, k_3, k_6$ werden dabei, wie für den NOx-Speicherkatalysator beschrieben, zuerst bestimmt.

Im folgenden wird erläutert, wie mit Hilfe der über die beschriebenen Modelle ermittelten Monolithtemperaturen die Betriebsbereitschaft des NOx-Speicherkatalysators erkannt und aufrechterhalten werden kann.

Zur optimalen Speicherung von NOx darf der NOX-Speicherkatalysator nur in einem bestimmten Temperaturfenster betrieben werden. Die entscheidenden Temperaturen sind dabei die Monolithtemperaturen. Damit ergibt sich als Bedingung für die Monolithtemperaturen:

$$\left(T_{Mon1} \in \left[T_{Min}, T_{Max}\right]\right) \wedge \left(T_{Mon2} \in \left[T_{Min}, T_{Max}\right]\right) \tag{16}$$

Beide Monolithtemperaturen müssen also innerhalb des von einem unteren Temperaturschwellenwert $T_{Min}$ und einem oberen Temperaturschwellenwert $T_{Max}$ begrenzten Temperaturintervalles liegen. Daraus ergibt sich eine zeitliche Bedingung, ab wann der NOx-Speicherkatalysator betriebsbereit ist und seine größte Konvertierungsrate besitzt.

In Figur 3 ist qualitativ der Verlauf des Wirkungsgrades der NOx-Konvertierung in Abhängigkeit der Monolithtemperatur $T_{Mon1}$ bzw. $T_{Mon2}$ graphisch dargestellt. Ein typischer Wert für $T_{Min}$ liegt bei 250°C, ein typischer Wert für $T_{Max}$ liegt bei 450°C. Ist die Temperatur des Monolithen kleiner als der untere Schwellenwert oder größer als der obere Schwellenwert, so findet die Konvertierung nur mit einem sehr geringen Wirkungsgrad statt. Das Temperaturfenster muß deshalb möglichst genau eingehalten werden.

Die mit Hilfe der beschriebenen Modelle bestimmten Monolithtemperaturen $T_{Mon1}$ und $T_{Mon2}$ werden nun mit diesen Schwellenwerten $T_{Min}$ und $T_{max}$ verglichen. Nur wenn beide Temperaturen innerhalb des durch die Schwellenwerte definierten Intervalls liegen, ist der NOx-Speicherkatalysator betriebsbereit und die Brennkraftmaschine kann in einem Betriebsbereich betrieben werden, der eine NOx-Speicherung erfordert (homogen mager oder geschichtet).

Liegt zumindest eine Monolithtemperatur außerhalb des Intervalles, so werden steuernde Maßnahmen eingeleitet, die entweder ein Aufheizen (bei Unterschreiten des unteren Schwellenwertes $T_{Min}$) oder ein Abkühlen (bei Überschreiten des oberen Schwellenwertes $T_{Max}$) des NOx-Speicherkatalysators bewirken. Dadurch wird erreicht, daß der NOx-Speicherkatalysator wieder in dem optimalen Temperaturbereich betrieben wird.

Als mögliche steuernde Maßnahme zum Erhöhen der Monolithtemperatur des NOx-Speicherkatalysators kann der Zündwinkel in Richtung spät verstellt werden und/oder die Brennkraftmaschine im Warmlauf mit fettem Gemisch in Verbindung mit Sekundärlufteinblasung betrieben werden.

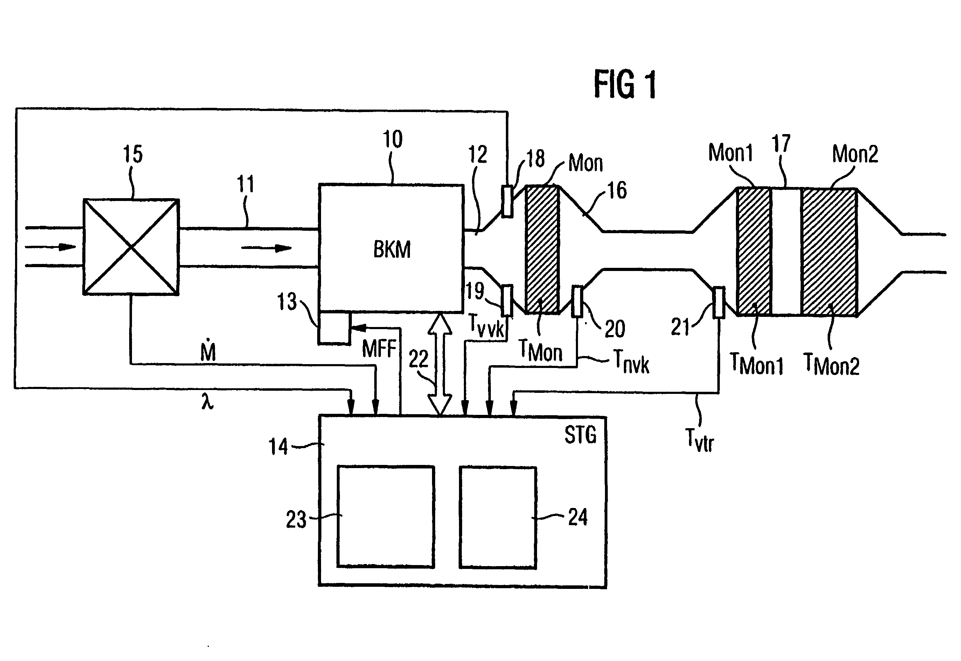

Zum Senken der Monolithtemperatur kann eine, in der Figur 1 nicht dargestellte, stromauf des NOx-Speicherkatalysators angeordnete Abgasklappe betätigt werden, die den Abgasweg verlängert, indem sie einen Teil des Abgases in einen Bypass leitet und somit eine Kühlung des Abgases bewirkt. Die Brennkraftmaschine kann aber auch mit fettem Gemisch betrieben werden, oder ein Teil des Abgases wird durch eine Abgasrückführeinrichtung wieder dem Verbrennungsprozess zugeführt, wodurch die Spitzentemperatur im Zylinder gesenkt wird und folgedessen das ausströmende Abgas eine geringere Temperatur aufweist.

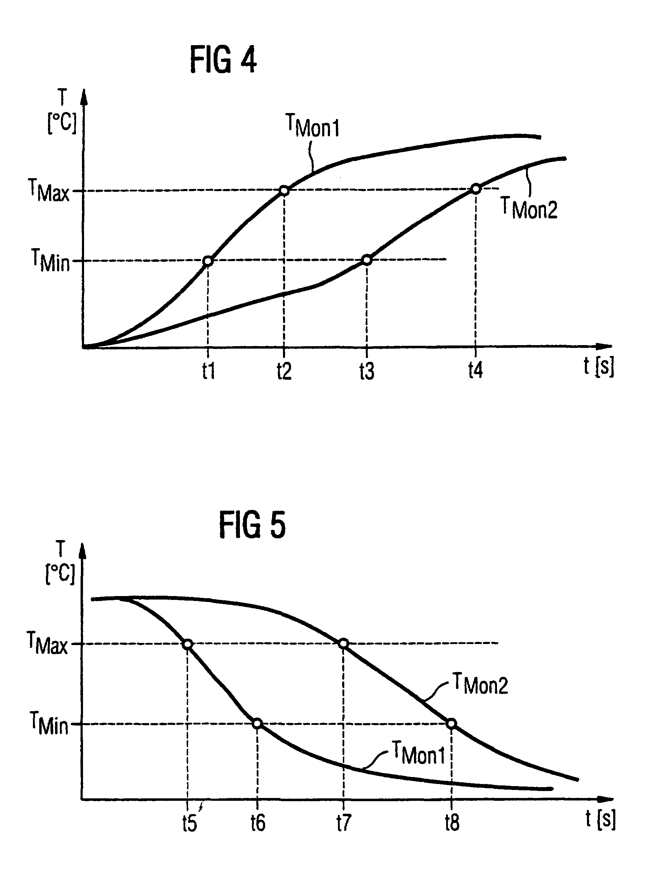

Die Figur 4 zeigt in qualitativer Darstellung die zeitlichen Verläufe der beiden Monolithtemperaturen $T_{Mon1}$ und $T_{Mon2}$ während des Aufheizvorganges des NOx-Speicherkatalysators. Das Aufheizverhalten ist gekennzeichnet durch $\frac{dT_{vtr}}{dt} > 0$.

Liegen beide Monolithtemperaturen $T_{Mon1}$ und $T_{Mon2}$ während des Aufheizvorganges noch unterhalb des Schwellenwertes $T_{Min}$, so steigt zunächst die Monolithtemperatur $T_{Mon1}$ des 1. Monolithen schneller an, als die Monolithtemperatur $T_{Mon2}$ des 2. Monolithen. Die Monolithtemperatur $T_{Mon1}$ erreicht den Schwellenwert $T_{Min}$ zum Zeitpunkt t1, während die Monolithtemperatur $T_{Mon2}$ diesen erst zum Zeitpunkt t3 erreicht. Dies bedeutet, daß die Monolithtemperatur $T_{Mon2}$ die kritische Temperatur ist. Erst wenn auch die Monolithtemperatur $T_{Mon2}$ den unteren Schwellenwert überschritten hat, steht die volle Konvertierungsfähigkeit und Speichereigenschaft des NOx-Speicherkatalysators zur Verfügung.

Liegen beide Monolithtemperaturen $T_{Mon1}$ und $T_{Mon2}$ im Intervall [$T_{Min}$, $T_{Max}$], so steigt zunächst die Monolithtemperatur $T_{Mon1}$ schneller an als die Monolithtemperatur $T_{Mon2}$. Die Monolithtemperatur $T_{Mon1}$ erreicht den Schwellenwert $T_{Max}$ zum Zeitpunkt t2, während die Monolithtemperatur $T_{Mon2}$ diesen erst zum Zeitpunkt t4 erreicht. Dies bedeutet, daß die Monolithtemperatur $T_{Mon1}$ die kritische Temperatur ist, da diese zuerst den oberen Schwellenwert $T_{Max}$ überschreitet.

Die Figur 5 zeigt in qualitativer Darstellung die zeitlichen Verläufe der beiden Monolithtemperaturen $T_{Mon1}$ und $T_{Mon2}$ während des Abkühlvorganges des NOx-Speicherkatalysators. Das Abkühlverhalten ist gekennzeichnet durch ($\frac{dT_{vtr}}{dt} < 0$)

Liegen beide Monolithtemperaturen $T_{Mon1}$ und $T_{Mon2}$ während des Aufheizvorganges noch oberhalb des Schwellenwertes $T_{Max}$, so fällt zunächst die Monolithtemperatur $T_{Mon1}$ des 1. Monolithen schneller ab, als die Monolithtemperatur $T_{Mon2}$ des 2. Monolithen. Die Monolithtemperatur $T_{Mon1}$ fällt zum Zeitpunkt t5 unterhalb des Schwellenwertes $T_{Max}$, während die Monolithtemperatur $T_{Mon2}$ diesen erst zum Zeitpunkt t7 unterschreitet. Dies bedeutet, daß die Monolithtemperatur $T_{Mon2}$ die kritische Temperatur ist. Messungen zeigen, daß die Zeitspanne t7-t5 bis zu ca. 200 Sekunden betragen kann.

Liegen beide Monolithtemperaturen $T_{Mon1}$ und $T_{Mon2}$ im Intervall $[T_{Mm}, T_{Max}]$, so fällt zunächst die Monolithtemperatur $T_{Mon1}$ schneller ab als die Monolithtemperatur $T_{Mon2}$. Die Monolithtemperatur $T_{Mon1}$ erreicht den unteren Schwellenwert $T_{Min}$ zum Zeitpunkt t6, während die Monolithtemperatur $T_{Mon2}$ diesen erst zum Zeitpunkt t8 erreicht. Dies bedeutet, daß die Monolithtemperatur $T_{Mon1}$ die kritische Temperatur ist, da diese zuerst den unteren Schwellenwert $T_{Min}$ unterschreitet.

**Patentansprüche**

1. Verfahren zum Erkennen und Aufrechterhalten der Betriebsbereitschaft eines im Abgastrakt (12) einer Brennkraftmaschine (10) angeordneten NOx-Speicherkatalysators (17), dem stromaufwärts ein 3-Wege-Eigenschaften aufweisender Vorkatalysator (16) vorgeschaltet ist, wobei

   - die Temperatur ($T_{vtr}, T_{nvk}$) des Abgases stromauf des NOx-Speicherkatalysators (17) ermittelt wird,

   - aus der ermittelten Abgastemperatur ($T_{vtr}$) über ein eine Energiebilanzierung beinhaltendes Temperaturmodell eine erste Monolithtemperatur ($T_{Mon1}$) am Eingang des NOx-Speicherkatalysators (17) berechnet wird,

   - bei der Energiebilanzierung der Alterungszustand des Vorkatalysators (16) berücksichtigt wird,

   - aus der ersten Monolithtemperatur ($T_{Mon1}$) über das Temperaturmodell eine zweite Monolithtemperatur ($T_{Mon2}$) am Ausgang des NOx-Speicherkatalysators (17) berechnet wird,

   - überprüft wird, ob beide Monolithtemperaturen ($T_{Mon1}, T_{Mon2}$) innerhalb eines vorgegebenen Temperaturintervalles ($[T_{Min}, T_{Max}]$) liegen,

   - in Abhängigkeit des Ergebnisses der Überprüfung steuernde Maßnahmen für den Betrieb der Brennkraftmaschine (10) eingeleitet werden, so daß diese Temperaturbedingung $[T_{Min}, T_{Max}]$ erfüllt und im weiteren Betrieb der Brennkraftmaschine aufrechterhalten wird.

2. Verfahren nach Anspruch 1, **dadurch gekennzeichnet, daß** die Temperatur des Abgases ($T_{vtr}, T_{nvk}$) mittels eines Temperatursensors (21) gemessen wird, der im Einlaßbereich des NOx-Speicherkatalysators (17) angeordnet ist.

3. Verfahren nach Anspruch 1, **dadurch gekennzeichnet, daß** die Temperatur des Abgases ($T_{nvk}$) am Auslaß des Vorkatalysators (16) ermittelt wird.

4. Verfahren nach Anspruch 3, **dadurch gekennzeichnet, daß** die Abgastemperatur ($T_{nvk}$) mittels eines Temperatursensors (20) gemessen wird.

5. Verfahren nach Anspruch 3, **dadurch gekennzeichnet daß** die Abgastemperatur ($T_{nvk}$) über ein Temperaturmodell für den Vorkatalysator (16) berechnet wird und als Eingangsgröße für dieses Modell die Abgastemperatur ($T_{vvk}$) am Auslaß der Brennkraftmaschine herangezogen wird.

6. Verfahren nach Anspruch 3, **dadurch gekennzeichnet daß** die Abgastemperatur ($T_{nvk}$) über ein Temperaturmodell für den Vorkatalysator (16) berechnet wird und als Eingangsgröße für dieses Modell die mittels eines Abgastemperaturmodells erhaltene Abgastemperatur herangezogen wird.

7. Verfahren nach Anspruch 6, **dadurch gekennzeichnet, daß** als Eingangsgröße für das Abgastemperaturmodell mindestens eine der folgenden Zustandsgrößen der Brennkraftmaschine angesaugte Luftmasse, Saugrohrdruck, Zündwinkel, Drehzahl, Kühlmitteltemperatur, Umgebungstemperatur verwendet wird, welche die Abgastemperatur beeinflußt

8. Verfahren nach Anspruch 6, **dadurch gekennzeichnet, daß** Maßnahmen zum Aufheizen des NOx-Speicherkatalysators (17) eingeleitet werden, wenn die Monolithtemperatur einen unteren Schwellenwert ($T_{Min}$) unterschreitet und Maßnahmen zum Abkühlen des NOx-Speicherkatalysators (17) eingeleitet werden, wenn die Monolithtemperatur einen oberen Schwellenwert ($T_{Max}$) überschreitet.

9. Verfahren nach Anspruch 8, **dadurch gekennzeichnet, daß** die Maßnahmen zum Aufheizen des NOx-Speicherkatalysators (17) eine Verstellung des Zündwinkels in Richtung spät und/oder einen Betrieb der Brennkraftmaschine im Warmlauf mit fettem Gemisch in Verbindung mit Sekundärlufteinblasung umfassen.

10. Verfahren nach Anspruch 8, **dadurch gekennzeichnet, daß** die Maßnahmen zum Abkühlen des NOx-Speicherkatalysators (17) das Ansteuern einer stromauf des NOx-Speicherkatalysators (17) angeordnete Abgasklappe umfassen, die den Abgasweg verlängert, indem sie einen Teil des Abgases in einen Bypass leitet.

11. Verfahren nach Anspruch 8, **dadurch gekennzeichnet, daß** die Maßnahmen zum Abkühlen des NOx-Speicherkatalysators einen Betrieb der Brennkraftmaschine mit fettem Gemisch umfassen oder das Aktivieren einer Abgasrückführeinrichtung, mit dem ein Teil des Abgases wieder dem Verbrennungsprozess zugeführt wird.

12. Verfahren nach Anspruch 1, **dadurch gekennzeichnet, daß** bei der Energiebilanzierung die thermische Energie des Monolithen, die thermische Masse des Monolithen, der Wärmeübergang von Abgas auf den Monolithen, die exotherme Reaktionsenergie und die Energieabgabe an die Umgebung durch Konvektion berücksichtigt wird.

13. Verfahren nach Anspruch 12, **dadurch gekennzeichnet, daß** aus der Energiebilanzierung eine gewöhnliche Differentialgleichung 1. Ordnung aufgestellt wird, aus der mittels eines Integrationsverfahrens die Monolithtemperatur bestimmt wird.

14. Verfahren nach Anspruch 12 oder 13, **dadurch gekennzeichnet, daß** der Alterungszustand des Vorkatalysators (16) mittels eines Wichtungsfaktors ($\alpha$) berücksichtigt wird, mit dem die exotherme Reaktionsenergie ($\dot{E}_{Ex}$) des NOx-Speicherkatalysators (17) beaufschlagt wird.

15. Verfahren nach Anspruch 14, **dadurch gekennzeichnet, daß** der Wichtungsfaktors ($\alpha$) in Abhängigkeit eines Katalysatordiagnosewertes ($K_D$) für den Vorkatalysator (16) ermittelt wird.

16. Verfahren nach Anspruch 14 oder 15, **dadurch gekennzeichnet, daß** der Wichtungsfaktor ($\alpha$) annähernd den Wert Null aufweist, wenn der Katalysatordiagnosewert ($K_D$) einen hohen Wert, insbesonder den Wert 1 aufweist und der Wichtungsfaktor ($\alpha$) den Wert 1 aufweist, wenn der Katalysatordiagnosewertes ($K_D$) einen niedrigen Wert, insbesondere den Wert Null aufweist.

17. Verfahren nach einem der Ansprüuche 14 -16, **dadurch gekennzeichnet, daß** die exotherme Reaktionsenergie ($\dot{E}_{Ex}$) des NOx-Speicherkatalysators (17) mit dem Wichtungsfaktor ($\alpha$) multipliziert wird.

**Claims**

1. A method for detecting and maintaining the readiness for service of an NOx storage catalytic converter (17) arranged in the exhaust passage (12) of an internal combustion engine (10), upstream of which NOx storage catalytic converter is connected a preliminary catalytic converter (16) having three-way characteristics, wherein

- the temperature ($T_{vtr}$, $T_{nvk}$) of the exhaust gas is determined upstream of the NOx storage catalytic converter (17),

- from the determined exhaust gas temperature ($T_{vtr}$) a first monolith temperature ($T_{Mon1}$) at the inlet of the NOx storage catalytic converter (17) is calculated by means of a temperature model containing an energy balance sheet,

- the ageing status of the preliminary catalytic converter (16) is taken into account in the energy balance sheet,

- by means of the temperature model, from the first monolith temperature ($T_{Mon1}$) a second monolith temperature ($T_{Mon2}$) is calculated at the outlet of the NOx storage catalytic converter,

- it is checked whether both monolith temperatures ($T_{Mon1}$, $T_{Mon2}$) lie within a predefined temperature interval ($[T_{Min}, T_{Max}]$),

- depending on the result of the check, control measures for running the internal combustion engine (10) are initiated such that this temperature condition [$T_{Min}$, $T_{Max}$] is fulfilled and maintained in continued running of the internal combustion engine.

2. A method according to claim 1, **characterized in that** the temperature of the exhaust gas ($T_{vtr}$, $T_{nvk}$) is measured by means of a temperature sensor (21) which is arranged in the inlet area of the NOx storage catalytic converter (17).

3. A method according to claim 1, **characterized in that** the temperature of the exhaust gas ($T_{nvk}$) is determined at the outlet of the preliminary catalytic converter (16).

4. A method according to claim 3, **characterized in that** the temperature of the exhaust gas ($T_{nvk}$) is measured by means of a temperature sensor (20).

5. A method according to claim 3, **characterized in that** the temperature of the exhaust gas ($T_{nvk}$) is calculated via a temperature model for the preliminary catalytic converter (16) and **in that** the exhaust gas temperature ($T_{vvk}$) at the outlet of the internal combustion engine is used as an input variable for this model.

6. A method according to claim 3, **characterized in that** the temperature of the exhaust gas ($T_{nvk}$) is calculated via a temperature model for the preliminary catalytic converter (16) and **in that** the exhaust gas temperature obtained by means of an exhaust gas temperature model is used as an input variable for this model.

7. A method according to claim 6, **characterized in that** at least one of the following state variables of the internal combustion engine: inducted air mass intake, intake manifold pressure, ignition angle, engine speed, coolant temperature, ambient temperature, which influences the exhaust gas temperature, is used as input variable for the exhaust gas temperature model.

8. A method according to claim 6, **characterized in that** measures are initiated for heating up the NOx storage catalytic converter (17) when the monolith temperature falls below a lower threshold value ($T_{Min}$) and measures for cooling down the NOx storage catalytic converter (17) are initiated when the monolith temperature exceeds an upper threshold value ($T_{Max}$).

9. A method according to claim 8, **characterized in that** the measures for heating up the NOx storage catalytic converter (17) comprise adjusting the ignition angle in the retarding direction and/or running the internal combustion engine in the warm-up stage with a rich mixture in conjunction with secondary air injection.

10. A method according to claim 8, **characterized in that** the measures for cooling down the NOx storage catalytic converter (17) comprise controlling an exhaust gas valve arranged upstream of the NOx storage catalytic converter (17), which valve extends the path of the exhaust gas **in that** it directs a portion of the exhaust gas into a bypass.

11. A method according to claim 8, **characterized in that** the measures for cooling down the NOx storage catalytic converter comprise running the internal combustion engine with a rich mixture or activating an exhaust gas recirculation device with which a portion of the exhaust gas is resupplied to the combustion process.

12. A method according to claim 1, **characterized in that** the energy balance sheet takes into account the thermal energy of the monolith, the thermal mass of the monolith, the transfer of heat from exhaust gas to the monolith, the exothermic reaction energy and the emission of energy to the environment through convection.

13. A method according to claim 12, **characterized in that** from the energy balance sheet a first-order ordinary differential equation is constructed, from which the monolith temperature is determined by means of an integration method.

14. A method according to claim 12 or claim 13, **characterized in that** the ageing state of the preliminary catalytic converter (16) is taken into account by means of a weighting factor ($\alpha$) which is applied to the exothermic reaction energy ($\dot{E}_{Ex}$) of the NOx storage catalytic converter (17).

15. A method according to claim 14, **characterized in that** the weighting factor ($\alpha$) is determined depending on a catalytic-converter diagnostic value ($K_D$) for the preliminary catalytic converter (16).

**16.** A method according to claim 14 or claim 15, **characterized in that** the weighting factor ($\alpha$) has approximately the value zero when the catalytic-converter diagnostic value ($K_D$) has a high value, in particular the value 1, and the weighting factor ($\alpha$) has the value 1 when the catalytic-converter diagnostic value ($K_D$) has a low value, in particular the value zero.

**17.** A method according to any one of claims 14-16, **characterized in that** the exothermic reaction energy ($\dot{E}_{Ex}$) of the NOx storage catalytic converter (17) is multiplied with the weighting factor ($\alpha$).

**Revendications**

**1.** Procédé permettant de connaître et de maintenir l'état de service d'un catalyseur accumulateur de NOx (17) disposé dans le collecteur pour gaz d'échappement (12) d'un moteur à combustion interne (10), en amont duquel est monté un précatalyseur (16) présentant des propriétés de catalyseur à trois voies, dans lequel

- la température ($T_{vtr}/T_{nvk}$) des gaz d'échappement est déterminée en amont du catalyseur accumulateur de NOx (17),
- une première température de monolithe ($T_{Mon1}$) à l'entrée du catalyseur accumulateur de NOx (17) est calculée, à l'aide d'un modèle de température incluant l'établissement d'un bilan énergétique, à partir de la température des gaz d'échappement ($T_{vtr}$) ainsi déterminée,
- l'état de vieillissement du précatalyseur (16) est pris en considération lors de l'établissement du bilan énergétique,
- une deuxième température de monolithe ($T_{Mon2}$) à la sortie du catalyseur accumulateur de NOx (17) est calculée, à l'aide dudit modèle de température, à partir de la première température de monolithe ($T_{Mon1}$),
- une vérification est effectuée pour savoir si les deux températures de monolithe ($T_{Mon1}/T_{Mon2}$) se situent à l'intérieur d'un intervalle de températures prédéfini ([$T_{Min},T_{Max}$]),
- des mesures régulatrices du fonctionnement du moteur à combustion interne (10) sont initialisées en fonction du résultat de la vérification afin que cette condition de température [$T_{Min},T_{Max}$] soit remplie et maintenue pendant le fonctionnement ultérieur du moteur à combustion interne.

**2.** Procédé selon la revendication 1, **caractérisé en ce que** la température des gaz d'échappement ($T_{vtr},T_{nvk}$) est mesurée au moyen d'un capteur de température (21) qui est disposé dans la zone d'entrée du catalyseur accumulateur de NOx (17).

**3.** Dispositif selon la revendication 1, **caractérisé en ce que** la température des gaz d'échappement ($T_{nvk}$) est déterminée à la sortie du précatalyseur (16).

**4.** Procédé selon la revendication 3, **caractérisé en ce que** la température des gaz d'échappement ($T_{nvk}$) est mesurée au moyen d'un capteur de température (20).

**5.** Procédé selon la revendication 3, **caractérisé en ce que** la température des gaz d'échappement ($T_{nvk}$) est calculée à l'aide d'un modèle de température pour le précatalyseur (16) et **en ce que** la température des gaz d'échappement à la sortie du moteur à combustion interne est utilisée comme grandeur d'entrée pour ce modèle.

**6.** Procédé selon la revendication 3, **caractérisé en ce que** la température des gaz d'échappement ($T_{nvk}$) est calculée à l'aide d'un modèle de température pour le précatalyseur (16) et **en ce que** la température des gaz d'échappement obtenue au moyen d'un modèle de température de gaz d'échappement est utilisée comme grandeur d'entrée pour ce modèle.

**7.** Procédé selon la revendication 6, **caractérisé en ce qu'**il est utilisé comme grandeur d'entrée pour le modèle de température de gaz d'échappement au moins une des variables d'état suivantes du moteur à combustion interne : masse d'air aspirée, pression de tuyau d'aspiration, angle d'allumage, nombre de tours, température de liquide de refroidissement, température ambiante, laquelle influe sur la température des gaz d'échappement.

**8.** Procédé selon la revendication 6, **caractérisé en ce que** des mesures permettant de réchauffer le catalyseur accumulateur de NOx (17) sont initialisées lorsque la température de monolithe descend au-dessous d'une valeur de seuil inférieure ($T_{Min}$) et **en ce que** des mesures permettant de refroidir le catalyseur accumulateur de NOx (17) sont initialisées lorsque la température de monolithe dépasse une valeur de seuil supérieure ($T_{Max}$).

**9.** Procédé selon la revendication 8, **caractérisé en ce que** les mesures permettant de réchauffer le catalyseur accumulateur de NOx (17) comprennent un réglage de l'angle d'allumage en direction "retard" et/ou un fonctionnement du moteur à combustion interne, en phase de réchauffement, avec un mélange riche en combinaison avec injection d'air secondaire.

**10.** Procédé selon la revendication 8, **caractérisé en ce que** les mesures permettant de refroidir le catalyseur accumulateur de NOx (17) comprennent l'activation d'un clapet d'échappement situé en amont du catalyseur accumulateur de NOx (17), lequel prolonge le trajet emprunté par les gaz d'échappement **en ce qu'**il fait passer une partie des gaz d'échappement dans un by-pass.

**11.** Procédé selon la revendication 8, **caractérisé en ce que** les mesures permettant de refroidir le catalyseur accumulateur de NOx comprennent un fonctionnement du moteur à combustion interne avec un mélange riche ou l'activation d'un dispositif de recyclage de gaz d'échappement grâce auquel une partie des gaz d'échappement est réinjectée dans le processus de combustion.

**12.** Procédé selon la revendication 1, **caractérisé en ce que**, lors de l'établissement du bilan énergétique, il est tenu compte de l'énergie thermique du monolithe, de la masse thermique du monolithe, de la transmission thermique entre les gaz d'échappement et le monolithe, de l'énergie de réaction exothermique et de l'énergie libérée par convection dans le milieu ambiant.

**13.** Procédé selon la revendication 12, **caractérisé en ce qu'**à partir de l'établissement du bilan énergétique est établie une équation différentielle ordinaire du premier ordre, à partir de laquelle la température de monolithe est déterminée au moyen d'un procédé d'intégration.

**14.** Procédé selon la revendication 12 ou 13, **caractérisé en ce qu'**il est tenu compte de l'état de vieillissement du précatalyseur (16) au moyen d'un facteur de pondération ($\alpha$) appliqué à l'énergie de réaction exothermique ($\dot{E}_{Ex}$) du catalyseur accumulateur de NOx (17).

**15.** Procédé selon la revendication 14, **caractérisé en ce que** le facteur de pondération ($\alpha$) est déterminé en fonction d'une valeur de diagnostic de catalyseur ($K_D$) établie pour le précatalyseur (16).

**16.** Procédé selon la revendication 14 ou 15, **caractérisé en ce que** le facteur de pondération ($\alpha$) présente sensiblement la valeur zéro lorsque la valeur de diagnostic de catalyseur ($K_D$) présente une valeur élevée, en particulier la valeur 1, et **en ce que** le facteur de pondération (a) présente la valeur 1 lorsque la valeur de diagnostic de catalyseur ($K_D$) présente une valeur faible, en particulier la valeur zéro.

**17.** Procédé selon l'une des revendications 14 à 16, **caractérisé en ce que** l'énergie de réaction exothermique ($\dot{E}_{Ex}$) du catalyseur accumulateur de NOx (17) est multipliée par le facteur de pondération ($\alpha$).

FIG 1

## FIG 2

Vorkatalysator
$T_{Mon}$

$\dot{E}_{in}$

$\dot{M}_{Abgas}$

$T_{in}$

$\dot{E}_{aus}$

$\dot{M}_{Abgas}$

$T_{NVK}$

$\dot{E}_{Gas \rightarrow Mon}$

$\dot{E}_{Ex}$

$\dot{E}_{Konv}$

$\dot{E}_{Rad}$

## FIG 3

$\eta$ [%]

$T_{Mon\ 1,2}$ [°C]

$T_{Min}$ (250)

$T_{Max}$ (450)

# FIG 4

# FIG 5